# EUROPEAN PATENT SPECIFICATION

(11) **EP 3 600 860 B1**
(45) Date of publication and mention of the grant of the patent: **11.12.2024**
(21) Application number: 18716672.3
(22) Date of filing: 22.03.2018
(51) Int. Cl.: B29D 11/00

(54) **APPARATUS FOR THE THERMAL CURING OF A LENS-FORMING MATERIAL**
VORRICHTUNG ZUM THERMISCHEN HÄRTEN EINES LINSENFORMENDEN MATERIALS
APPAREIL DESTINÉ AU DURCISSEMENT THERMIQUE D'UN MATÉRIAU DE FORMATION DE LENTILLE

(30) Priority: 27.03.2017 US 201762477039 P
(43) Date of publication of application: 05.02.2020
(73) Proprietor: Alcon Inc., 1701 Fribourg (CH)
(72) Inventor: STUTZ, Michael, 63868 Grosswallstadt (DE); GOLLAS, Nicholas, 63868 Grosswallstadt (DE); BRAUN, Matthias, 63868 Grosswallstadt (DE)
(74) Representative: Bohest AG
(86) International application number: PCT/IB2018/051955
(87) International publication number: WO 2018/178823

(56) References cited:
- EP-A1- 1 289 738
- US-A- 5 319 007
- US-A1- 2007 124 919
- US-A1- 2010 258 962
- US-A1- 2014 008 824
- US-A1- 2015 147 425

## Description

### FIELD OF THE INVENTION

The invention relates to an apparatus for the thermal curing of a lens-forming material contained in a lens mold to form a contact lens, such as a soft contact lens.

### BACKGROUND OF THE INVENTION

Production of ophthalmic lenses, in particular contact lenses such as soft contact lenses, is typically performed with the aid of molds comprising two mold halves, a male mold half and a female mold half. A lens-forming material is introduced into one of the two mold halves, for example into the female mold half, and the mold halves are then mated. The lens-forming material is thereafter cured to form the contact lens, which is subsequently demolded for further handling the contact lens.

US 2015/0147425 A1 discloses a method of producing contact lenses with the aid of a lens mold carrier to which mold units comprising re-usable mold halves typically made of glass are mounted. Such re-usable glass mold halves are expensive and are not suitable for thermal curing of the lens-forming material.

Another way to efficiently produce contact lenses is to use inexpensive mold halves. Inexpensive mold halves may be produced through injection-molding. Materials which are particularly suitable for injection-molding are injection-moldable plastics, such as polyolefines, for example polypropylene. However, polypropylene mold halves may deform as the lens-forming material shrinks during curing, so that the mold halves cannot be reused. Also, during curing of the lens-forming material no excess lens-forming material is allowed to flow into the mold cavity. Therefore, the extent of shrinkage of the lens-forming material must be kept small in order to produce contact lenses having the desired geometry and optical power. This is why curing of the lens-forming material in the mold cavity must occur only gradually, which is achieved by exposing the mold (the mated mold halves) and the lens-forming material contained therein to heat of a predetermined temperature and over an extended period of time, for example as much as one hour or even more. To nevertheless ensure that production of contact lenses with the aid of inexpensive single-use mold halves is efficient, it is mandatory that a very high number of mated mold halves containing the lens-forming material are simultaneously exposed to heat.

It is therefore an object of the invention to suggest an apparatus allowing for simultaneous exposure of very high numbers of inexpensive single-use molds containing the lens-forming material to heat while at the same providing for a constant high quality of the contact lenses produced and while allowing for an automated handling of the molds.

### SUMMARY OF THE INVENTION

These and other objects of the invention are achieved with an apparatus as specified by the features of the independent claim. Advantageous aspects of the apparatus according to the invention are the subject of the dependent claims.

As used in the specification including the appended claims, the singular forms "a", "an", and "the" include the plural, unless the context explicitly dictates otherwise. Also, whenever features are combined with the term "or", the term "or" is to be understood to also include "and" unless it is evident from the specification that the term "or" must be understood as being exclusive.

In the present specification, the terms "upper/above" and "lower/below" are defined in relation to a tray on which a mold support and a lens mold are arranged.

"Upper/above" describes a direction away from the tray towards the mold support and the lens mold, and "lower/below" describes a direction from the mold support and the lens mold towards the tray.

Generally, different aspects can be combined with each other in any possible manner unless the specification dictates otherwise.

In accordance with the invention, an apparatus for thermal curing of a lens-forming material contained in a lens mold to form an ophthalmic lens, in particular a contact lens, such as a soft contact lens is suggested.

The apparatus comprises:
- a tray made of metal, for example aluminum, the tray having a fixation opening,
- a mold support made of plastic, for example a polyolefine such as polypropylene,
   wherein the mold support has a fastener fixed to the tray at the fixation opening and fixing the mold support to the tray,
   wherein the mold support further has a positioning guide configured to guide a lens mold onto the mold support and into a predetermined position relative to the tray, and wherein the mold support further has a support surface,
- a lens mold made from an injection-moldable plastic material, for example a polyolefine such as polypropylene, arranged on the mold support, the lens mold having a bearing surface resting on the support surface of the mold support.

The lens mold is arranged spaced apart from the tray by a clearance distance.

In accordance with one aspect of the apparatus according to the invention, the mold support is a separate piece and the fastener is a resilient latch removably fixing the mold support to the tray at the fixation opening.

In accordance with a further aspect of the apparatus according to the invention, the mold support is a ring comprising an annular ring body and the latch. The latch extends from the annular ring body into the fixation opening of the tray and fixedly engages the tray.

In accordance with still a further aspect of the apparatus according to the invention, the annular ring body has a height and a bottom surface resting on an upper surface of the tray. The lens mold has a base surface facing the tray. The bearing surface of the lens mold is arranged at a predetermined distance above the base surface. The height of the annular ring body is greater than the predetermined distance by the clearance distance.

Yet in accordance with a further aspect of the apparatus according to the invention, the support surface is an annular top surface of the annular ring body. The annular top surface has a top surface inner diameter and a top surface outer diameter. The bearing surface of the lens mold is an annular abutment surface arranged on an underside of the lens mold. The annular abutment surface has an abutment surface inner diameter and an abutment surface outer diameter. The abutment surface inner diameter of the lens mold is smaller than the top surface inner diameter of the annular ring body and the abutment surface outer diameter of the lens mold is larger than the top surface outer diameter of the annular ring body.

In accordance with a further aspect of the apparatus according to the invention, the positioning guide comprises a conical surface arranged at an outer peripheral portion of the annular ring body. The conical surface tapers inwardly with increasing distance from the tray. The lens mold further comprises a centering flange for engaging the conical surface of the annular ring body in order to align the annular abutment surface of the lens mold with the annular top surface of the annular ring body during arrangement of the lens mold on the ring.

In accordance with still a further aspect of the apparatus according to the invention, the upper end of the conical surface merges with the annular top surface at an outer edge thereof having the top surface outer diameter. The lower end of the conical surface has a lower end conical surface diameter larger than the top surface outer diameter. The centering flange of the lens mold has a flange inner diameter which is larger than the lower end conical surface diameter.

In accordance with yet another aspect of the apparatus according to the invention, the fixation opening of the tray is a disk-shaped mounting hole. The annular ring body defines a central hole surrounded by the annular ring body. The central hole of the annular ring body is aligned with the disk-shaped mounting hole of the tray.

In accordance with another aspect of the apparatus according to the invention, the mold support comprises a plate having a plate base surface resting on an upper surface of the tray, and the latch. The latch extends from the plate into the fixation opening of the tray and fixedly engages the tray.

According to a further aspect of the apparatus according to the invention, the plate has a plate thickness and comprises a plate top surface which is arranged opposite to the plate base surface. The plate top surface forms the support surface of the mold support. The bearing surface of the lens mold is a base surface of the lens mold that rests on the plate top surface. The plate thickness thus represents the clearance distance.

According to still a further aspect of the apparatus according to the invention, the lens mold comprises a mold base part and a mold top part. The assembled mold base part and mold top part together form the lens mold. The mold base part comprises a centering flange projecting radially outwardly and forming the outer boundary of the mold base part. The positioning guide comprises at least three centering pins arranged on the plate top surface at different locations such that they enclose the centering flange of the mold base part, thereby defining the predetermined position of the lens mold relative to the tray.

Yet in accordance with a further aspect of the apparatus according to the invention, the mold base part further comprises a tab extending radially outwardly from the centering flange. The positioning guide further comprises at least one pair of positioning pins arranged at predetermined positions on the plate top surface to determine the angular position of the tab of the mold base part.

In accordance with a further aspect of the apparatus according to the invention, the at least one pair of positioning pins comprises two pairs of positioning pins arranged at different predetermined positions on the plate top surface to determine a first angular position and a second angular position of the tab of the mold base part. The second angular position is angularly displaced relative to the first angular position by an angle of 90°.

In accordance with a further aspect of the apparatus according to the invention, the fixation opening of the tray is a disk-shaped mounting hole and the tray further comprises an additional disk-shaped passage hole. The plate comprises first and second disk-shaped passage holes, with the first passage hole of the plate being aligned with the passage hole of the tray and the second passage hole of the plate being aligned with the mounting hole of the tray.

In accordance with a further aspect of the apparatus according to the invention, the tray comprises a passage hole and the plate comprises a through-hole. The through-hole of the plate is arranged superimposed with the passage hole of the tray.

In accordance with another aspect of the apparatus according to the invention, the apparatus comprises a plurality of plates adjacently arranged on the same tray.

In accordance with a further, more general, aspect of the apparatus according to the invention, the apparatus comprises a stack of trays with mold supports fixed to the respective trays and with lens molds arranged on the mold supports. The trays are arranged one above the other in the stack and are separated by spacers.

The metal tray of the apparatus according to the invention provides for the necessary rigidity and stiffness, as the tray may have a considerable size allowing a high number of molds to be arranged on the same tray. For example, a number of two hundred and fifty-six molds (arranged in sixteen rows and sixteen columns) or even more may be arranged on a single tray. Aluminum may be used as a metal, since aluminum is of comparatively light weight and does not have a high heat capacity, so that it allows for a comparatively quick heating when the tray with the molds arranged on the mold supports are heated in the oven and also allows for a quick cooling when the temperature is cooled down again in the oven (so that the plates can be quickly handled after removal from the oven). The mold support is made of a plastic which acts as a thermal insulator. Polyolefines, for example polypropylene, are plastic materials having the afore-mentioned properties and at the same time allow for a cheap and reliable manufacturing of the mold supports, for example by injection molding. As the mold is arranged on the mold support spaced apart from the metal tray by the clearance distance the lens mold is practically arranged thermally separated from the tray as there is no heat conductive contact between the les mold and the tray. Accordingly, when the molds are exposed to heat during curing of the lens-forming material over extended periods of time, for example in an oven, the entire mold containing the lens-forming material is uniformly heated through convection. Any non-uniform heating of the mold through a thermally conductive contact of the mold with the metal plate is avoided. This leads to a uniform and homogeneous curing of the lens-forming material contained in the mold. The fastener allows for a precise and easy mounting of the mold support to the tray.

The plastic mold support can be made as a separate piece which can be easily fixed to the tray at the fixation opening of the tray, for example by means of a resilient latch of the mold support, thus enabling an easy and quick mounting or removal of the mold support to the tray (for example in case the mold supports must be mounted to the tray or must be removed from the tray, for example during replacement).

One advantageous design option for the plastic mold support is a ring comprising an annular ring body from which the latch extends. The ring design allows for an easy, reliable and cheap production of the mold supports (e.g. through injection molding) and allows for an easy mounting of the individual mold supports to the metal tray at the fixation openings by simply having the one or more latches of the ring form a snap-fit connection with the walls of the tray at the respective fixation openings. The snap-fit connection can be formed through insertion of the ring into the fixation opening of the metal tray from above. Also, the snap-fit connection allows for an easy removal of the rings from the tray, if necessary, for example during replacement.

Preferably, the lens mold has a base surface facing the tray, and this base surface is arranged above the upper surface of the tray and spaced apart from the upper surface of the tray by the clearance distance. This arrangement of the base surface of the lens mold above the upper surface of the tray can be achieved by the plastic mold support having an annular ring body of a predetermined height, and this predetermined height of the annular ring body is greater than the distance at which the bearing surface of the lens mold is arranged above the base surface of the lens mold by the said clearance distance.

As has been discussed already, the lens mold may have an abutment surface resting on an annular top surface of the annular ring body. As the molds are placed on the ring-shaped mold supports (for example with the aid of a robot), they may not be absolutely precisely aligned with the ring body. To allow for small positional misalignments, the abutment surface inner diameter of the lens mold is smaller than the top surface inner diameter of the annular ring body, and the abutment surface outer diameter of the lens mold is larger than the top surface outer diameter of the annular ring body. As a result, even in case of small misalignments the molds can be properly placed on the ring-shaped mold support, so that the bearing surface of the lens mold rests on the annular top surface of the mold support.

Placement of the lens mold on the ring-shaped mold support may be further facilitated in case the ring-shaped mold support comprises a conical centering surface at an outer peripheral portion of the annular ring body of the ring-shaped mold support. In particular, this conical surface merges with the annular top surface on which the bearing surface of the lens mold rests. The lens mold comprises a centering flange extending downwardly in a direction towards the tray. During placement of the lens mold on the mold support, in case of a small positional misalignment the centering flange of the mold may engage the conical surface of the ring-shaped mold support and thus assists in guiding the lens mold to be aligned with the mold support, so that the lens mold comes to properly rest on the mold support.

The annular ring body of the ring-shaped mold support defines a central hole. In case the fixation opening is a disk-shaped mounting hole and the central hole of the annular ring body is aligned with the mounting hole of the tray, convection is further improved. This is advantageous with respect to a homogeneous curing of the lens-forming material contained in the lens mold.

In another advantageous design option the plastic mold support comprises a plate having a plate base surface resting on the upper surface of the tray. The latch extends from the plate into the fixation opening of the tray thus fixing the (plastic) plate to the tray. The plate design also renders production of the mold support easy and inexpensive due to the simple shape of the plate. For example, the plate may also be produced through injection molding and can be easily attached or removed from the tray, which is advantageous when the plate has to be mounted to the tray or has to be removed (e.g. for replacement). The molds may be directly arranged on the upper surface of the plastic plate so that the plate thickness represents the clearance distance C by which the molds are arranged spaced from the tray.

Lens molds typically comprise a mold base part and a mold top part. The mold base part of the lens mold may comprise a centering flange that projects radially outwardly and runs circumferentially around the mold base part, thus forming the outer boundary of the mold base part. For properly centering the mold on the plate-shaped mold support at the desired position three or more centering pins may be arranged at different locations on the top surface of the plate such that they enclose the centering flange. While more than three such centering pins may be arranged on the plate top surface, at least three must be there to achieve the centering function. The centering pins may comprise conical surfaces to facilitate centering of the molds at the desired position in case of small misalignments during placement of the mold on the plastic plate.

In addition, in order to provide for a proper orientation of the mold on the plastic plate, the mold base part may comprise a tab and the plate may comprise at least one pair of positioning pins. The mold is then arranged on the plastic plate such that the tab of the mold base part extends between the two positioning pins of the pair. Thus, the (angular) orientation of the mold is determined, which may be of particular advantage as a high number of molds is to be arranged on the tray or the plastic plate, respectively, so that collisions or overlapping of mold portions of adjacently arranged molds can be avoided.

For example, it may be possible to have two pairs of positioning pins which are arranged at different predetermined angular positions which are angularly displaced by ninety degrees. This allows for arrangement of the molds in exactly two positions, and also allows for arranging a high number of molds on the plate for simultaneous curing of the lens-forming material contained in the molds, thus rendering lens production particularly effective.

The fixation opening of the tray may be embodied as one or more disk-shaped mounting holes, and the tray may further comprise one or more additional disk-shaped passage holes. Correspondingly, the plate may comprises first and second disk-shaped passage holes, with the first passage hole(s) of the plate being aligned with the passage hole(s) of the tray and the second passage hole(s) of the plate being aligned with the mounting hole(s) of the tray in order to improve the flow of heated air and the homogeneous curing of the lens-forming material.

Regardless of the design of the mold support, it is particularly advantageous to have a stack of trays with mold supports fixed to the respective trays and lens molds arranged on the mold supports, with the trays being stacked one above the other in the stack and being separated by spacers. This further improves the efficiency of the production process, since such stack of trays further increases the number of lens molds which can be simultaneously exposed to heat, thus increasing the number of lenses which can be simultaneously produced.

### BRIEF DESCRIPTION OF THE DRAWINGS

Further advantageous aspects of the invention become apparent from the following description of embodiments of the invention with the aid of the drawings in which:
- Fig. 1: shows a perspective view of a first embodiment of the apparatus according to the invention;
- Fig. 2: is an enlarged view of a portion (lower left corner portion) of the apparatus shown in Fig. 1;
- Fig. 3: shows a cross-sectional view of the apparatus according to the first embodiment;
- Fig. 4: shows perspective view of the mold support (ring) according to the first embodiment of the apparatus according to the invention;
- Fig. 5: is a cross-sectional view of the mold support (ring) shown in Fig. 4;
- Fig. 6: is a detailed cross-sectional view of the lens mold arranged on the mold support (ring);
- Fig. 7: shows a perspective view of a second embodiment of the apparatus according to the invention;
- Fig. 8: shows an enlarged cross-sectional view of a portion of the apparatus shown in Fig. 7;
- Fig. 9: shows an enlarged view of a portion of the apparatus shown in Fig. 7 (lower left corner portion); and
- Fig. 10: shows a cross-sectional view of a portion of the apparatus shown in Fig. 7.

### DETAILED DESCRIPTION OF EMBODIMENTS

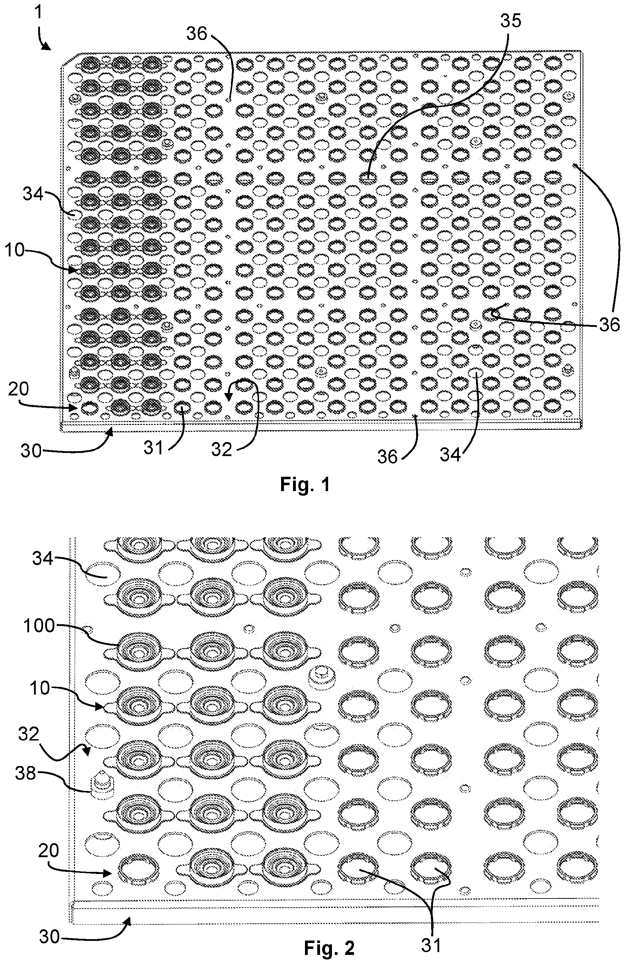

**Fig. 1** shows a first embodiment of an apparatus 1 according to the invention for thermal curing of a lens-forming material contained in a lens mold 10 (of which only a mold base part 100 is visible). Lens mold 10 is arranged on a mold support which is fixed to a tray 30. Tray 30 is made of metal, for example aluminum, or is made of any other suitable metal. The shape of the tray is generally rectangular, with the edges of the tray 30 being bent downwardly. At one corner (upper left corner in Fig. 1) the rectangular tray 30 has a cut-away portion. This cut-away portion forms a reference for identification of the rotational orientation of the tray 30 which may be helpful in the automated handling of tray 30. A number of supporting webs are arranged at the underside of tray 30, some of them being arranged to run in the horizontal direction (one of them being indicated in Fig. 1 by reference sign 35) while others being arranged to run perpendicular thereto. These supporting webs serve for increasing rigidity and stiffness of tray 30 and are secured to tray 30 with the aid of screws (not shown) screwed through small holes 36 provided in the tray 30.

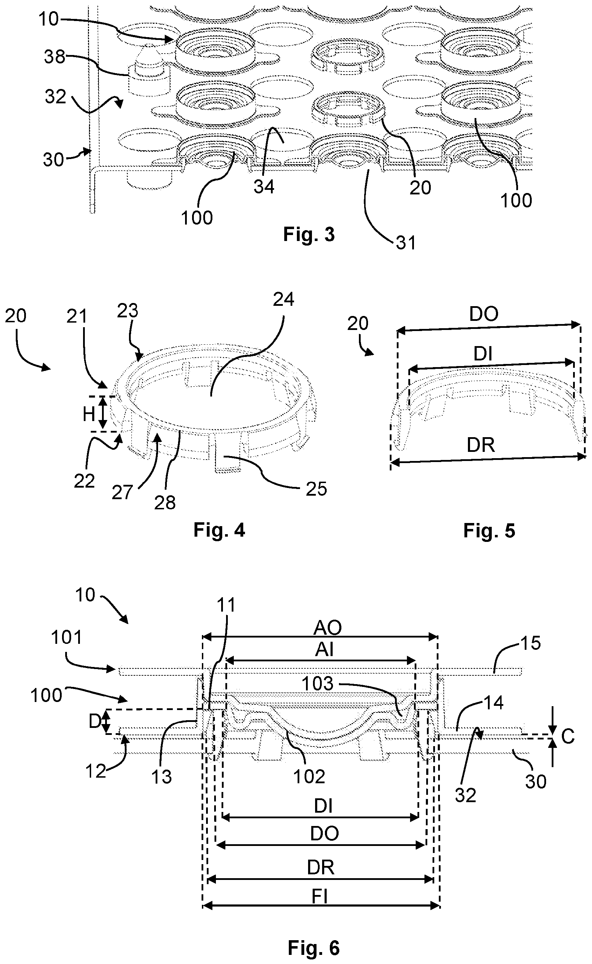

Tray 30 has an upper surface 32 and comprises a plurality of fixation openings embodied as disk-shaped mounting holes 31 at which mold supports are fixed to the tray 30. In addition, tray 30 comprises a plurality of disk-shaped passage holes 34 which are arranged offset relative to the disk-shaped mounting holes 31 at which the mold supports are fixed to the tray 30. The mold supports are embodied as rings 20 which are manufactured as separate pieces made of plastic, for example a polyolefine such as polypropylene. In **Fig. 1** as well as in **Fig. 2** and **Fig. 3**, at some of the disk-shaped mounting holes 31 only the rings 20 are shown fixed to the tray 30 (with no lens molds 10 being arranged on the rings 20) while at other disk-shaped mounting holes 31 a mold base part 100 of lens mold 10 is shown arranged on the respective rings 20. This is shown only for the sake of better understanding, since in practice only assembled complete lens molds 10 comprising both the mold base part 100 as well as a mold top part 101 and containing lens-forming material enclosed in a mold cavity 102 are arranged on the rings 20 in the manner shown in Fig.6, as will be described in more detail below.

In **Fig. 4** and **Fig. 5** ring 20 (the mold support) is shown in more detail. Ring 20 comprises an annular ring body 21 as well as a plurality of downwardly extending flexible latches 25. Annular ring body 21 has a bottom surface 22 and an annular top surface 23, and defines a central hole 24 surrounded by the annular ring body 21. Annular ring body 21 has a height H extending from the bottom surface 22 to the annular top surface 23.

Annular top surface 23 has a top surface inner diameter DI and a top surface outer diameter DO. A conical surface 27 of the annular ring body 21 merges with the annular top surface 23 at an outer edge 28 of the annular top surface 23. Accordingly, conical surface 27 at its upper end has an outer diameter corresponding to the outer diameter DO of the annular top surface 23, while at its lower end it has a larger diameter DR corresponding to the outer diameter of the annular ring body 21.

To mount ring 20 to tray 30, latches 25 are introduced from above into the disk-shaped mounting holes 31 of tray 30, whereupon ring 20 is lowered until the bottom surface 22 of annular ring body 21 abuts against the upper surface 32 of tray 30. Latches 25 then form a snap-fit with the tray 30, thus fixing ring 20 to the tray 30 at the disk-shaped mounting hole 31. In this state, ring 20 projects upwardly from the upper surface 32 of tray 30 by the height H of the annular ring body 21. This state where the ring 20 is mounted to the tray 30 at the disk-shaped mounting hole 31 is shown in Fig. 1, Fig. 2 and Fig. 3 at those locations where only the ring 20 is shown mounted to the tray 30.

As can be seen from **Fig. 6**, lens mold 10 comprises the mold base part 100 and the mold top part 101 mated to the mold base part 100 to form the mold cavity 102 defining the shape of the contact lens to be formed. Before assembling mold base part 100 and mold top part 101 of lens mold 10, a lens-forming material is dispensed into the concave lens-forming portion of mold base part 100. Upon mating the mold top part 101 with the mold base part 100, excess lens-forming material is displaced into an annular overflow channel 103 and the mold cavity 102 is sealed.

Lens mold 10 further comprises a base surface 12 arranged on mold base part 100, and an annular abutment surface 11 arranged on an underside of mold base part 100. Annular abutment surface 11 is arranged at a predetermined distance D above the base surface 12 and has an abutment surface inner diameter Al and an abutment surface outer diameter AO. A centering flange 13 is arranged on the mold base part 100 and extends downwardly from the annular abutment surface 11 to the base surface 12. Mold base part 100 is provided with a tab 14 and mold top part 101 is provided with a tab 15, too. These tabs 14, 15 facilitate handling of the mold parts 100, 101. As can be seen best in Fig. 2 and Fig. 3, the distance between adjacent mounting holes 31 of the tray 30 is chosen such that the tabs 14 of the mold base parts 100 of the lens molds 10 arranged on adjacent rings 20 cannot collide. This holds similarly for the tabs 15 of the mold top parts 101 of the lens molds 10 arranged on adjacent rings 20.

During placement of the lens mold 10 on the ring 20, in case of a small misalignment the centering flange 13 may come into contact with the conical surface 27 which then guides the lens mold 10 and properly aligns the lens mold 10 with the ring 20. Once the lens mold 10 is arranged on the ring 20, annular abutment surface 11 on the underside of mold base part 100 of lens mold 10 rests on annular top surface 23 of the annular ring body 21 of ring 20 in a manner such that the base surface 12 is arranged at a clearance distance C above the upper surface 32 of tray 30. For example, this clearance distance C may be in the range of 0.5 mm to 5 mm, and is the difference between the height H of the annular ring body 21 of the ring 20 and the predetermined distance D which the annular abutment surface 11 is arranged above the base surface 12. Accordingly, the arrangement of the lens mold 10 at the clearance distance C above the upper surface 32 of the tray 30 can be achieved by a suitable choice of the height H of the annular ring body 21 of the ring 20 and the predetermined distance D between the base surface 12 and the abutment surface 11 of the mold base part 100 of lens mold 10.

As can be seen further in Fig. 6, the abutment surface inner diameter AI of the abutment surface 11 of lens mold 10 is smaller than the top surface inner diameter DI of the top surface 23 of the annular ring body 21. The abutment surface outer diameter AO of the abutment surface 11 of lens mold 10 is larger than the top surface outer diameter DO of the top surface 23 of annular ring body 21. This allows for a proper arrangement of the lens mold 10 on the ring 20. Finally, an inner diameter FI of the centering flange 13 is larger than the diameter DR of the lower end of the conical surface 27 which corresponds to the outer diameter of the annular ring body 21 in the embodiment shown. As can also be seen in Fig. 6, the central hole 24 defined by the annular ring body 21 is aligned with the mounting hole 31 of the tray 30.

Assembly of the apparatus 1 according to the first embodiment is performed as follows. First, tray 30 is provided having a number of, for example, two hundred and fifty-six mounting holes 31. Next, a corresponding number of rings 20 are fixed to the tray 30 at the mounting holes 31 with the aid of the latches 25. Thereafter, on each of the rings 20 a lens mold 10 containing lens-forming material is placed, and in case of small misalignments during placement of the lens molds 10 on the rings 20 the centering flange 13 may come into contact with the conical surface 27 of the annular ring body 21 of ring 20. The lens mold 10 is thus guided onto the ring 20 and is properly aligned with the respective ring 20. Once a lens mold 10 is arranged on each of the rings 20, the tray 30 is ready for being placed in an oven for thermal curing of the lens-forming material.

For increasing the efficiency, it is advantageous to arrange a plurality of trays 30 with rings 20 mounted to the mounting holes 31 and with lens molds 10 arranged on the rings 20 in a stack. For example, the apparatus according to the invention may comprise a stack of trays comprising between twenty and thirty individual trays 30. The individual trays 30 of the stack are arranged spaced apart from each other with the aid of spacers 38 which are mounted to the respective tray 30 and which allow for easy stacking of the individual trays 30. Any suitable spacers known in the art can be used for this purpose and, accordingly, the spacers 38 are not described in more detail. Once the stack of trays has been formed, it is placed in an oven for thermally curing the lens-forming material contained in the lens molds 10.

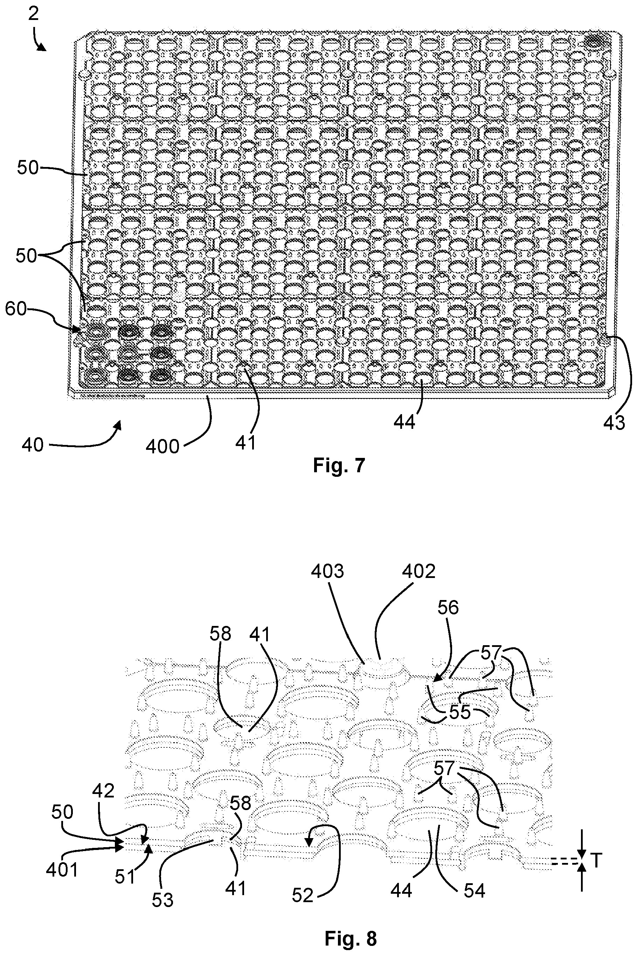

**Fig. 7** shows a second embodiment of the apparatus 2 according to the invention. Some aspects discussed in connection with the first embodiment also hold for the second embodiment, so that these aspects are not discussed here again. In the second embodiment a tray 40 comprises a frame 400 and a number of supporting webs (not shown) on which metal sheets 401 (see Fig. 8) are arranged, which are supported by the frame 400 and by the webs (not shown), and which are retained thereon with the aid of screws 402 and washers 403. Frame 400, the supporting webs (not shown) as well as the metal sheets 401 may be made from aluminum to provide for sufficient rigidity and stiffness while at the same time being of light weight. When the metal sheets 401 are arranged in place, an upper surface 42 of the tray 40 is formed that extends in a common plane.

Tray 40 comprises a plurality of fixation openings embodied as disk-shaped mounting holes 41 (formed in the metal sheets 401) for fixing the mold support to the tray 40 at the mounting holes 41. In addition, tray 40 comprises a number of disk-shaped passage holes 44 (also formed in the metal sheets 401) which - in the embodiment shown - are larger in diameter than the mounting holes 41. By way of example, two hundred and fifty-six disk-shaped passage holes 44 may be provided in the tray 40.

Unlike the mold support of the first embodiment which is embodied as a ring, the mold support of the second embodiment of the apparatus according to the invention is embodied as a plastic plate 50, and a plurality of such plastic plates 50 may be adjacently arranged on the tray and are fixed to the same tray 40. By way of example only and as can be seen in Fig. 7, sixteen such plastic plates 50 may be adjacently arranged on the same tray 40 and are fixed thereto.

Plastic plate 50 has a plate base surface 51 and a plate top surface 52, as can be seen best in **Fig. 8****.** The plate base surface 51 rests on the upper surface 42 of the tray 40 and has a plate thickness T. Plate 50 further comprises a plurality of first disk-shaped passage holes 54 and a plurality of second disk-shaped passage holes 58. At the walls of some of the second disk-shaped passage holes 58, latches 53 extend downwardly from the plastic plate 50.

To mount plastic plate 50 to metal tray 40, the latches 53 of plate 50 are introduced into the mounting holes 41 of tray 40, whereupon plate 50 is further moved downwards towards tray 40 until the plate base surface 51 comes to rest on the upper surface 42 of tray 40. The latches 53 engage the tray 40 at the mounting holes 41 through a snap-fit connection, thus removably fixing the plate 50 to the tray 40. This state is shown in Fig. 8, and it can also be seen there that the first disk-shaped passage holes 54 of plate 50 are aligned with the passage holes 44 of tray 40 while the second disk-shaped passage holes 58 of plate 50 are aligned with the mounting holes 41 of tray 40.

As can be seen further from Fig. 8, four centering pins 55 are arranged on the plate top surface 52 around each of the first disk-shaped passage holes 54. The centering pins 55 project upwardly from the plate top surface 52 and may have a conical surface 56. In addition, near each of the first disk-shaped passage holes 54 two pairs of positioning pins 57 are arranged on the plate top surface 52 at different first and second angular positions, these angular positions being different by 90° (ninety degrees). The positioning pins 57 may also have a conical surface. The function of the centering pins 55 and of the positioning pins 57 will be described in more detail below.

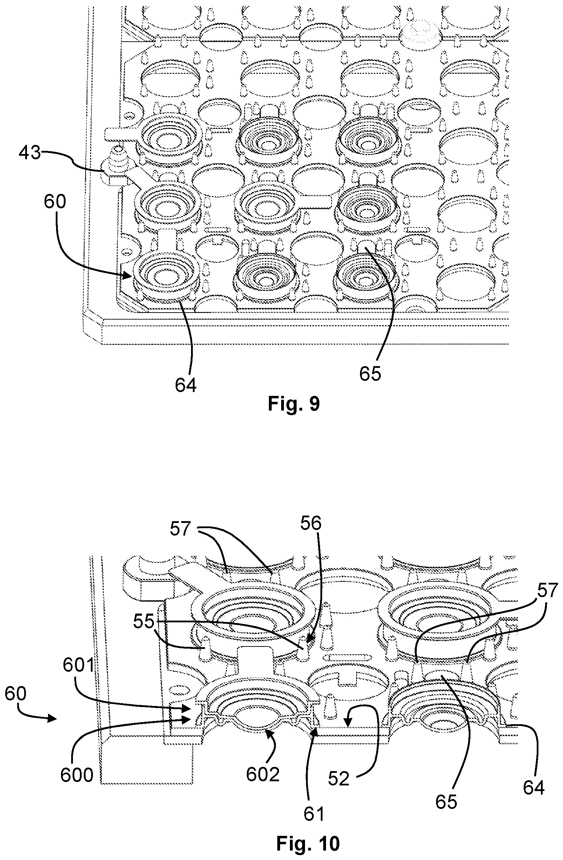

As can be seen best from **Fig. 9** and **Fig. 10**, the lens mold 60 again comprises a mold base part 600 and a mold top part 601 which are mated and enclose a mold cavity 602 containing a lens-forming material to be cured to form a contact lens. Mold base part 600 comprises a centering flange 64 projecting radially outwardly and forming the outer boundary of mold base part 600. A base surface 61 of mold base part 600 rests on the plate top surface 52, so that plate top surface 52 of plate 50 forms the support surface of the mold support and base surface 61 of mold base part 600 forms the bearing surface of the mold 60. The plate thickness T thus represents the clearance distance C by which the lens mold 60 is arranged spaced apart from the tray 40. Mold base part 600 further comprises an elongated tab 65 which helps in placing the lens mold 60 in a well-defined rotational orientation on plate 50, as is discussed in more detail below.

Upon placing lens mold 60 on the plate top surface 52, mold base part 600 must have a rotational orientation such that the elongated tab 65 fits between one of the two pairs of positioning pins 57, so that the positioning pins 57 determine the first and second angular positions of the elongated tab 65. In addition, the mold base part 600 must be placed on the plate top surface 52 such that the centering flange 64 is enclosed by the centering pins 55. In case of a small misalignment, the conical surfaces 56 of the centering pins 55 assist in centering the mold base part 600 (and thus in centering the mold 60) so that it comes to rest at the desired predetermined position. Similarly, the elongated tab 65 may be guided by the conical surfaces of the positioning pins 57.

Once lens molds 60 are placed at each of the desired predetermined positions on the top surface 52 of each of the plates 50 fixed to the tray 40 (in the embodiment shown, once two hundred and fifty-six lens molds 60 are placed on the plates 50 fixed to the tray 40), tray 40 is ready for being placed in the oven for curing of the lens-forming material contained in the mold cavities 602 of the lens molds 60 to form the contact lenses.

For increasing the efficiency, it is advantageous to arrange a plurality of trays 40 with plates 50 mounted to the mounting holes 41 and with lens molds 60 arranged on the top surfaces 52 of plates 50 in a stack. For example, the apparatus according to the invention may comprise a stack of trays comprising between twenty and thirty individual trays 40. The individual trays 40 of the stack are arranged spaced apart from each other with the aid of spacers 43 (see Fig. 7 or Fig. 9), which are mounted to the respective tray 40 and which allow for easy stacking of the individual trays 40. Any suitable spacers known in the art can be used for this purpose and, accordingly, the spacers 43 are not described in more detail. Once the stack of trays has been formed, it is placed in an oven for thermally curing the lens-forming material contained in the lens molds 60.

While embodiments of the invention have been described with the aid of the drawings, it is obvious that many changes and/or modifications are possible without departing from the teaching underlying the invention. Therefore, the scope of protection is not limited to the embodiments described but is defined by the appended claims.

## Claims

1. Apparatus (1, 2) for the thermal curing of a lens-forming material contained in a lens mold (10, 60) to form a contact lens, such as a soft contact lens, the apparatus comprising:
- a tray (30, 40) made of metal, for example aluminum, the tray having a fixation opening (31, 41),
- a mold support (20, 50) made of plastic, for example a polyolefine such as polypropylene,
wherein the mold support (20, 50) has a fastener (25, 53) fixed to the tray (30, 40) at the fixation opening (31, 41) and fixing the mold support (20, 50) to the tray (30, 40), wherein the mold support (20, 50) further has a positioning guide (27, 55) configured to guide a lens mold (10, 60) onto the mold support (20, 50) and into a predetermined position relative to the tray (30, 40)
and wherein the mold support (20, 50) further has a support surface (23, 52), and
- a lens mold (10, 60) made from an injection-moldable plastic material, for example a polyolefine such as polypropylene, arranged on the mold support (20, 50), the lens mold (10, 60) having a bearing surface (11, 61) resting on the support surface (23, 52) of the mold support (20, 50),
wherein the lens mold (10, 60) is arranged spaced apart from the tray (30, 40) by a clearance distance (C, T).

2. Apparatus (1, 2) according to claim 1, wherein the mold support (20, 50) is a separate piece, and wherein the fastener is a resilient latch (25, 53) removably fixing the mold support (20, 50) to the tray (30, 40) at the fixation opening (31, 41).

3. Apparatus (1) according to claim 2, wherein the mold support is a ring (20) comprising an annular ring body (21) and the latch (25), the latch (25) extending from the annular ring body (21) into the fixation opening (31) of the tray (30) and fixedly engaging the tray (30).

4. Apparatus (1) according to claim 3, wherein the annular ring body (21) has a height (H) and a bottom surface (22) resting on an upper surface (32) of the tray (30), wherein the lens mold (10) has a base surface (12) facing the tray (30), and wherein the bearing surface of the lens mold (10) is arranged at a predetermined distance (D) above the base surface (12), with the height (H) of the annular ring body (21) being greater than the predetermined distance (D) by the clearance distance (C).

5. Apparatus (1) according to anyone of claims 3 or 4, wherein the support surface is an annular top surface (23) of the annular ring body (21), the annular top surface (23) having a top surface inner diameter (DI) and a top surface outer diameter (DO), and wherein the bearing surface of the lens mold (10) is an annular abutment surface (11) arranged on an underside of the lens mold (10), the annular abutment surface (11) having an abutment surface inner diameter (Al) and an abutment surface outer diameter (AO), with the abutment surface inner diameter (Al) of the lens mold (10) being smaller than the top surface inner diameter (DI) of the annular ring body (21) and the abutment surface outer diameter (AO) of the lens mold (10) being larger than the top surface outer diameter (DO) of the annular ring body (21).

6. Apparatus (1) according to claim 5, wherein the positioning guide comprises a conical surface (27) arranged at an outer peripheral portion of the annular ring body (21), the conical surface (27) tapering inwardly with increasing distance from the tray (30), and wherein the lens mold (10) further comprises a centering flange (13) for engaging the conical surface (27) of the annular ring body (21) in order to align the annular abutment surface (11) of the lens mold (10) with the annular top surface (23) of the annular ring body (21) during arrangement of the lens mold (10) on the ring (20).

7. Apparatus (1) according to claim 6, wherein the upper end of the conical surface (27) merges with the annular top surface (23) at an outer edge (28) thereof having the top surface outer diameter (DO), wherein the lower end of the conical surface (27) has a lower end conical surface diameter (DR) larger than the top surface outer diameter (DO), and wherein the centering flange (13) of the lens mold (10) has a flange inner diameter (FI) larger than the lower end conical surface diameter (DR).

8. Apparatus (1) according to anyone of claims 3 to 7, wherein the fixation opening of the tray (30) is a disk-shaped mounting hole (31), and wherein the annular ring body (21) defines a central hole (24) surrounded by the annular ring body (21), the central hole (24) of the annular ring body (21) being aligned with the disk-shaped mounting hole (31) of the tray (30).

9. Apparatus (2) according to claim 2, wherein the mold support comprises a plate (50) having a plate base surface (51) resting on an upper surface (42) of the tray (40) and the latch (53), the latch (53) extending from the plate (50) into the fixation opening (41) of the tray (40) and fixedly engaging the tray (40).

10. Apparatus (2) according to claim 9, wherein the plate (50) has a plate thickness (T) and comprises a plate top surface (52) being arranged opposite to the plate base surface (51), wherein the plate top surface (52) forms the support surface of the mold support, and wherein the bearing surface of the lens mold (60) is a base surface (61) of the lens mold (60) resting on the plate top surface (52), the plate thickness (T) thus representing the clearance distance (C).

11. Apparatus (2) according to claim 10, wherein the lens mold (60) comprises a mold base part (600) and a mold top part (601), the assembled mold base part (600) and mold top part (601) together forming the lens mold (60), wherein the mold base part (600) comprises a centering flange (64) projecting radially outwardly and forming the outer boundary of the mold base part (600), and wherein the positioning guide comprises at least three centering pins (55) arranged on the plate top surface (52) at different locations such that they enclose the centering flange (64) of the mold base part (600), thereby defining the predetermined position of the lens mold (60) relative to the tray (40).

12. Apparatus (2) according to claim 11, wherein the mold base part (600) further comprises a tab (65) extending radially outwardly from the centering flange (64), and wherein the positioning guide further comprises at least one pair of positioning pins (57) arranged at predetermined positions on the plate top surface (52) to determine the angular position of the tab (65) of the mold base part (600).

13. Apparatus (2) according to claim 12, wherein the at least one pair of positioning pins (57) comprises two pairs of positioning pins (57) arranged at different predetermined positions on the plate top surface (52) to determine a first angular position and a second angular position of the tab (65) of the mold base part (600), the second angular position being angularly displaced relative to the first angular position by an angle of 90°.

14. Apparatus (2) according to anyone of claims 9 to 13, wherein the fixation opening of the tray (40) is a disk-shaped mounting hole (41) and the tray (40) further comprises an additional disk-shaped passage hole (44), and wherein the plate (50) comprises a first and second disk-shaped passage holes (54, 58), with the first passage hole (54) of the plate (50) being aligned with the passage hole (44) of the tray (40) and the second passage hole (58) of the plate (50) being aligned with the mounting hole (41) of the tray (40).

15. Apparatus (2) according to any one of claims 9 to 14, wherein the apparatus comprises a plurality of plates (50) adjacently arranged on the same tray (40).

16. Apparatus (1, 2) according to any one of claims 1 to 15, wherein the apparatus comprises a stack of trays (30, 40) with mold supports (20, 50) fixed to the respective trays (30, 40) and with lens molds (10, 60) arranged on the mold supports (20, 50), the trays (30, 40) being arranged one above the other in the stack and being separated by spacers (38, 43).

## Patentansprüche

1. Vorrichtung (1, 2) zum thermischen Härten eines linsenbildenden Materials, das in einem Linsenformwerkzeug (10, 60) enthalten ist, um eine Kontaktlinse, wie eine weiche Kontaktlinse, zu bilden, wobei die Vorrichtung umfasst:
- eine Ablage (30, 40), die aus Metall, beispielsweise Aluminium, gefertigt ist, wobei die Ablage eine Fixieröffnung (31, 41) hat,
- einen Formwerkzeugträger (20, 50), der aus Kunststoff gefertigt ist, beispielsweise einem Polyolefin, wie Polypropylen,
wobei der Formwerkzeugträger (20, 50) einen an der Ablage (30, 40) an der Fixieröffnung (31, 41) fixierten Befestiger (25, 53) aufweist, und der Formwerkzeugträger (20, 50) an der Ablage (30, 40) fixiert wird, wobei der Formwerkzeugträger (20, 50) des Weiteren eine Positionierungsführung (27, 55) aufweist, die ausgestaltet ist, um ein Linsenformwerkzeug (10, 60) auf den Formwerkzeugträger (20, 50) und in eine vorbestimmte Position relativ zu der Ablage (30, 40) zu führen,
und wobei der Formwerkzeugträger (20, 50) des Weiteren eine Trägeroberfläche (23, 52) aufweist, und
- ein Linsenformwerkzeug (10, 60), das aus einem spritzgießbaren Kunststoffmaterial gefertigt ist, beispielsweise einem Polyolefin, wie Polypropylen, und auf einem Formwerkzeugträger (20, 50) angeordnet ist, wobei das Linsenformwerkzeug (10, 60) eine Auflageoberfläche (11, 61) aufweist, die auf der Trägeroberfläche (23, 52) des Formwerkzeugträgers (20, 50) ruht,
wobei das Linsenformwerkzeug (10, 60) um einen Freiraumabstand (C, T) beabstandet von der Ablage (30, 40) angeordnet ist.

2. Vorrichtung (1, 2) nach Anspruch 1, wobei der Formwerkzeugträger (20, 50) ein separates Teil ist, und wobei der Befestiger ein elastischer Riegel (25, 53) ist, der den Formwerkzeugträger (20, 50) abnehmbar an der Fixieröffnung (31, 41) an der Ablage (30, 40) fixiert.

3. Vorrichtung (1) nach Anspruch 2, wobei der Formwerkzeugträger ein Ring (20) ist, der einen kranzförmigen Ringkörper (21) und den Riegel (25) umfasst, wobei der Riegel (25) sich von dem kranzförmigen Ringkörper (21) in die Fixieröffnung (31) der Ablage (30) erstreckt und fest mit der Ablage (30) in Eingriff kommt.

4. Vorrichtung (1) nach Anspruch 3, wobei der kranzförmige Ringkörper (21) eine Höhe (H) und eine Bodenoberfläche (22) aufweist, die auf einer oberen Oberfläche (32) der Ablage (30) ruht, wobei das Linsenformwerkzeug (10) eine Basisoberfläche (12) hat, die zu der Ablage (30) weist, und wobei die Auflageoberfläche des Linsenformwerkzeugs (10) in einem vorbestimmten Abstand (D) oberhalb der Basisoberfläche (12) angeordnet ist, wobei die Höhe (H) des kranzförmigen Ringkörpers (21) um den Freiraumabstand (C) größer als der vorbestimmte Abstand (D) ist.

5. Vorrichtung (1) nach einem der Ansprüche 3 oder 4, wobei die Trägeroberfläche eine kranzförmige oberste Oberfläche (23) des kranzförmigen Ringkörpers (21) ist, wobei die kranzförmige oberste Oberfläche (23) einen Innendurchmesser (DI) der obersten Oberfläche und einen Außendurchmesser (DO) der obersten Oberfläche aufweist, und wobei die Auflageoberfläche des Linsenformwerkzeugs (10) eine kranzförmige Anschlagoberfläche (11) ist, die auf einer Unterseite des Linsenformwerkzeugs (10) angeordnet ist, wobei die kranzförmige Anschlagoberfläche (11) einen Innendurchmesser (AI) der Anschlagoberfläche und einen Außendurchmesser (AO) der Anschlagoberfläche hat, wobei der Innendurchmesser (AI) der Anschlagoberfläche des Linsenformwerkzeugs (10) kleiner als der Innendurchmesser (DI) der obersten Oberfläche (DI) des kranzförmigen Ringkörpers (21) ist und der Außendurchmesser (AO) der Anschlagoberfläche des Linsenformwerkzeugs (10) größer als der Außendurchmesser (DO) der obersten Oberfläche des kranzförmigen Ringkörpers (21) ist.

6. Vorrichtung (1) nach Anspruch 5, wobei die Positionierungsführung eine konische Oberfläche (27) umfasst, die auf einem äußeren peripheren Anteil des kranzförmigen Ringkörpers (21) angeordnet ist, wobei die konische Oberfläche (27) sich mit zunehmendem Abstand zu der Ablage (30) nach innen verjüngt, und wobei das Linsenformwerkzeug (10) des Weiteren einen Zentrierflansch (13) umfasst, um mit der konischen Oberfläche (27) des kranzförmigen Ringkörpers (21) in Eingriff zu kommen, um die kranzförmige Anschlagoberfläche (11) des Linsenformwerkzeugs (10) während der Anordnung des Linsenformwerkzeugs (10) auf dem Ring (20) mit der kranzförmigen obersten Oberfläche (23) des kranzförmigen Ringkörpers (21) auszurichten.

7. Vorrichtung (1) nach Anspruch 6, wobei das obere Ende der konischen Oberfläche (27) mit der kranzförmigen obersten Oberfläche (23) an einem Außenrand (28) davon, der den Außendurchmesser (DO) der obersten Oberfläche hat, zusammenläuft, wobei das untere Ende der konischen Oberfläche (27) einen konischen Oberflächendurchmesser (DR) am unteren Ende hat, der größer als der Außendurchmesser (DO) der obersten Oberfläche ist, und wobei der Zentrierflansch (13) des Linsenformwerkzeugs (10) einen Innendurchmesser (DI) des Flansches hat, der größer als der konische Oberflächendurchmesser (DR) am unteren Ende ist.

8. Vorrichtung (1) nach einem der Ansprüche 3 bis 7, wobei die Fixieröffnung der Ablage (30) ein scheibenförmiges Montageloch (31) ist, und wobei der kranzförmige Ringkörper (21) ein zentrales Loch (24) definiert, das von dem kranzförmigen Ringkörper (21) umgeben ist, wobei das zentrale Loch (24) des kranzförmigen Ringkörpers (21) mit dem scheibenförmigen Montageloch (31) der Ablage (30) ausgerichtet ist.

9. Vorrichtung (2) nach Anspruch 2, wobei der Formwerkzeugträger eine Platte (50) umfasst, die eine Plattenbasisoberfläche (51), die auf einer oberen Oberfläche (42) der Ablage (40) ruht, und den Riegel (53) aufweist, wobei der Riegel (53) sich von der Platte (50) in die Fixieröffnung (41) der Ablage (40) erstreckt und fest in Eingriff mit der Ablage (40) kommt.

10. Vorrichtung (2) nach Anspruch 9, wobei die Platte (50) eine Plattendicke (T) hat und eine oberste Plattenoberfläche (52) umfasst, die gegenüber von der Plattenbasisoberfläche (51) angeordnet ist, wobei die oberste Plattenoberfläche (52) die Trägeroberfläche des Formwerkzeugträgers bildet, und wobei die Auflageoberfläche des Linsenformwerkzeugs (60) eine Basisoberfläche (61) des Linsenformwerkzeugs (60) ist, die auf der obersten Plattenoberfläche (52) ruht, wobei die Plattendicke (T) somit den Freiraumabstand (C) repräsentiert.

11. Vorrichtung (2) nach Anspruch 10, wobei das Linsenformwerkzeug (60) ein Formwerkzeugbasisteil (600) und ein Formwerkzeugoberteil (601) umfasst, wobei das montierte Formwerkzeugbasisteil (600) und Formwerkzeugoberteil (601) zusammen das Linsenformwerkzeug (60) bilden, wobei das Formwerkzeugbasisteil (600) einen Zentrierflansch (64) umfasst, der radial auswärts vorspringt und die Außengrenze des Formwerkzeugbasisteils (600) bildet, und wobei die Positionierungsführung mindestens drei Zentrierstifte (55) umfasst, die auf der obersten Plattenoberfläche (52) an unterschiedlichen Orten angeordnet sind, so dass sie den Zentrierflansch (64) des Formwerkzeugbasisteils (600) umschließen, wodurch die vorbestimmte Position des Linsenformwerkzeugs (60) relativ zu der Ablage (40) definiert wird.

12. Vorrichtung (2) nach Anspruch 11, wobei das Formwerkzeugbasisteil (600) des Weiteren eine Lasche (65) umfasst, die sich von dem Zentrierflansch (64) radial auswärts erstreckt, und wobei die Positionierungsführung des Weiteren mindestens ein Paar Positionierungsstifte (57) umfasst, die an vorbestimmten Positionen der obersten Plattenoberfläche (52) angeordnet sind, um die Winkelposition der Lasche (65) des Formwerkzeugbasisteils (600) zu bestimmen.

13. Vorrichtung (2) nach Anspruch 12, wobei das mindestens eine Paar von Positionierungsstiften (57) zwei Paare von Positionierungsstiften (57) umfasst, die an unterschiedlichen vorbestimmten Positionen auf der obersten Plattenoberfläche (52) angeordnet sind, um eine erste Winkelposition und eine zweite Winkelposition der Lasche (65) des Formwerkzeugbasisteils (600) zu bestimmen, wobei die zweite Winkelposition relativ zu der ersten Winkelposition um einen Winkel von 90° winkelverschoben ist.

14. Vorrichtung (2) nach einem der Ansprüche 9 bis 13, wobei die Fixieröffnung der Ablage (40) ein scheibenförmiges Montageloch (41) ist, und die Ablage (40) des Weiteren ein zusätzliches scheibenförmiges Durchgangsloch (44) umfasst, und wobei die Platte (50) ein erstes und ein zweites scheibenförmiges Durchgangsloch (54, 58) umfasst, wobei das erste Durchgangsloch (54) der Platte (50) mit dem Durchgangsloch (44) der Ablage (40) ausgerichtet ist, und das zweite Durchgangsloch (58) der Platte (50) mit dem Montageloch (41) der Ablage (40) ausgerichtet ist.

15. Vorrichtung (2) nach einem der Ansprüche 9 bis 14, wobei die Vorrichtung eine Vielzahl von Platten (50) umfasst, die benachbart auf derselben Ablage (40) angeordnet sind.

16. Vorrichtung (1, 2) nach einem der Ansprüche 1 bis 15, wobei die Vorrichtung einen Stapel von Ablagen (30, 40) mit Formwerkzeugträgern (20, 50) umfasst, die an den jeweiligen Ablagen (30, 40) fixiert sind, und wobei Linsenformwerkzeuge (10, 60) auf den Formwerkzeugträgern (20, 50) angeordnet sind, wobei die Ablagen (30, 40) übereinander in dem Stapel angeordnet sind und durch Distanzstücke (38, 43) getrennt sind.

## Revendications

1. Appareil (1, 2) destiné au durcissement thermique d'un matériau de formation de lentille contenu dans un moule de lentille (10, 60) pour former une lentille de contact, telle qu'une lentille de contact souple, l'appareil comprenant :
- un plateau (30, 40) constitué de métal, par exemple d'aluminium, le plateau ayant une ouverture de fixation (31, 41),
- un support de moule (20, 50) constitué de plastique, par exemple d'une polyoléfine telle que le polypropylène,
le support de moule (20, 50) ayant un élément de fixation (25, 53) fixé au plateau (30, 40) au niveau de l'ouverture de fixation (31, 41) et fixant le support de moule (20, 50) au plateau (30, 40),
le support de moule (20, 50) ayant en outre un guide de positionnement (27, 55) configuré pour guider un moule de lentille (10, 60) sur le support de moule (20, 50) et dans une position prédéterminée par rapport au plateau (30, 40),
et le support de moule (20, 50) ayant en outre une surface de support (23, 52), et
un moule de lentille (10, 60) constitué d'un matériau plastique injectable, par exemple une polyoléfine telle que le polypropylène, agencé sur le support de moule (20, 50), le moule de lentille (10, 60) ayant une surface d'appui (11, 61) reposant sur la surface de support (23, 52) du support de moule (20, 50),
le moule de lentille (10, 60) étant agencé à une distance de dégagement (C, T) du plateau (30, 40).

2. Appareil (1, 2) selon la revendication 1, le support de moule (20, 50) étant une pièce séparée, et l'élément de fixation étant un élément de verrouillage élastique (25, 53) fixant de manière amovible le support de moule (20, 50) au plateau (30, 40) au niveau de l'ouverture de fixation (31, 41).

3. Appareil (1) selon la revendication 2, le support de moule étant un anneau (20) comprenant un corps d'anneau annulaire (21) et l'élément de verrouillage (25), l'élément de verrouillage (25) s'étendant depuis le corps d'anneau annulaire (21) dans l'ouverture de fixation (31) du plateau (30) et venant en prise de manière fixe avec le plateau (30).

4. Appareil (1) selon la revendication 3, le corps d'anneau annulaire (21) ayant une hauteur (H) et une surface inférieure (22) reposant sur une surface supérieure (32) du plateau (30), le moule de lentille (10) ayant une surface de base (12) orientée vers le plateau (30), et la surface d'appui du moule de lentille (10) étant agencée à une distance prédéterminée (D) au-dessus de la surface de base (12), la hauteur (H) du corps d'anneau annulaire (21) étant supérieure à la distance prédéterminée (D) de la distance de dégagement (C).

5. Appareil (1) selon l'une quelconque des revendications 3 ou 4, la surface de support étant une surface supérieure annulaire (23) du corps d'anneau annulaire (21), la surface supérieure annulaire (23) ayant un diamètre intérieur de surface supérieure (DI) et un diamètre extérieur de surface supérieure (DO), et la surface d'appui du moule de lentille (10) étant une surface de butée annulaire (11) agencée sur une face inférieure du moule de lentille (10), la surface de butée annulaire (11) ayant un diamètre intérieur de surface de butée (AI) et un diamètre extérieur de surface de butée (AO), le diamètre intérieur de surface de butée (AI) du moule de lentille (10) étant inférieur au diamètre intérieur de surface supérieure (DI) du corps d'anneau annulaire (21) et le diamètre extérieur de surface de butée (AO) du moule de lentille (10) étant supérieur au diamètre extérieur de surface supérieure (DO) du corps d'anneau annulaire (21).

6. Appareil (1) selon la revendication 5, le guide de positionnement comprenant une surface conique (27) agencée sur une partie périphérique extérieure du corps d'anneau annulaire (21), la surface conique (27) se rétrécissant vers l'intérieur à mesure que la distance par rapport au plateau (30) augmente, et le moule de lentille (10) comprenant en outre une bride de centrage (13) pour venir en prise avec la surface conique (27) du corps d'anneau annulaire (21) afin d'aligner la surface de butée annulaire (11) du moule de lentille (10) avec la surface supérieure annulaire (23) du corps d'anneau annulaire (21) lors de l'agencement du moule de lentille (10) sur l'anneau (20).

7. Appareil (1) selon la revendication 6, l'extrémité supérieure de la surface conique (27) fusionnant avec la surface supérieure annulaire (23) au niveau d'un bord extérieur (28) de celle-ci ayant le diamètre extérieur de surface supérieure (DO), l'extrémité inférieure de la surface conique (27) ayant un diamètre de surface conique d'extrémité inférieure (DR) supérieur au diamètre extérieur de surface supérieure (DO), et la bride de centrage (13) du moule de lentille (10) ayant un diamètre intérieur de bride (FI) supérieur au diamètre de surface conique d'extrémité inférieure (DR).

8. Appareil (1) selon l'une quelconque des revendications 3 à 7, l'ouverture de fixation du plateau (30) étant un trou de montage en forme de disque (31), et le corps d'anneau annulaire (21) définissant un trou central (24) entouré par le corps d'anneau annulaire (21), le trou central (24) du corps d'anneau annulaire (21) étant aligné avec le trou de montage en forme de disque (31) du plateau (30).

9. Appareil (2) selon la revendication 2, le support de moule comprenant une plaque (50) ayant une surface de base de plaque (51) reposant sur une surface supérieure (42) du plateau (40) et l'élément de verrouillage (53), l'élément de verrouillage (53) s'étendant depuis la plaque (50) dans l'ouverture de fixation (41) du plateau (40) et venant en prise de manière fixe avec le plateau (40).

10. Appareil (2) selon la revendication 9, la plaque (50) ayant une épaisseur de plaque (T) et comprenant une surface supérieure de plaque (52) disposée à l'opposé de la surface de base de plaque (51), la surface supérieure de plaque (52) formant la surface de support du support de moule, et la surface d'appui du moule de lentille (60) étant une surface de base (61) du moule de lentille (60) reposant sur la surface supérieure de plaque (52), l'épaisseur de plaque (T) représentant ainsi la distance de dégagement (C).

11. Appareil (2) selon la revendication 10, le moule de lentille (60) comprenant une partie de base de moule (600) et une partie supérieure de moule (601), la partie de base de moule (600) et la partie supérieure de moule (601) assemblées formant ensemble le moule de lentille (60), la partie de base de moule (600) comprenant une bride de centrage (64) faisant saillie radialement vers l'extérieur et formant la limite extérieure de la partie de base de moule (600), et le guide de positionnement comprenant au moins trois broches de centrage (55) agencées sur la surface supérieure de plaque (52) à différents endroits de manière à entourer la bride de centrage (64) de la partie de base de moule (600), définissant ainsi la position prédéterminée du moule de lentille (60) par rapport au plateau (40).

12. Appareil (2) selon la revendication 11, la partie de base de moule (600) comprenant en outre une languette (65) s'étendant radialement vers l'extérieur à partir de la bride de centrage (64), et le guide de positionnement comprenant en outre au moins une paire de broches de positionnement (57) agencées à des positions prédéterminées sur la surface supérieure de plaque (52) pour déterminer la position angulaire de la languette (65) de la partie de base de moule (600).

13. Appareil (2) selon la revendication 12, l'au moins une paire de broches de positionnement (57) comprenant deux paires de broches de positionnement (57) agencées à différentes positions prédéterminées sur la surface supérieure de plaque (52) pour déterminer une première position angulaire et une seconde position angulaire de la languette (65) de la partie de base de moule (600), la seconde position angulaire étant décalée angulairement par rapport à la première position angulaire d'un angle de 90°.

14. Appareil (2) selon l'une quelconque des revendications 9 à 13, l'ouverture de fixation du plateau (40) étant un trou de montage en forme de disque (41) et le plateau (40) comprenant en outre un trou de passage supplémentaire en forme de disque (44), et la plaque (50) comprenant un premier et un second trous de passage en forme de disque (54, 58), le premier trou de passage (54) de la plaque (50) étant aligné avec le trou de passage (44) du plateau (40) et le second trou de passage (58) de la plaque (50) étant aligné avec le trou de montage (41) du plateau (40).

15. Appareil (2) selon l'une quelconque des revendications 9 à 14, l'appareil comprenant une pluralité de plaques (50) agencées de manière adjacente sur le même plateau (40).

16. Appareil (1, 2) selon l'une quelconque des revendications 1 à 15, l'appareil comprenant une pile de plateaux (30, 40) avec des supports de moule (20, 50) fixés aux plateaux respectifs (30, 40) et avec des moules de lentille (10, 60) agencés sur les supports de moule (20, 50), les plateaux (30, 40) étant agencés les uns au-dessus des autres dans la pile et étant séparés par des éléments d'espacement (38, 43).
